# EUROPEAN PATENT APPLICATION

(11) **EP 2 479 700 A1**
(43) Date of publication of application: **25.07.2012**
(21) Application number: 09849233.3
(22) Date of filing: 14.09.2009
(51) Int. Cl.: G06F 21/22

(54) **SECURE AUDIT SYSTEM AND SECURE AUDIT METHOD**

(71) Applicant: Mori, Kiyoshi, Tokyo 102-0094 (JP); Suginaka, Junko, Tokyo 105-0001 (JP)
(72) Inventor: SUGINAKA Junko, Tokyo 105-0001 (JP); FURUKAWA Yoshihisa, Tokyo 102-0094 (JP)
(74) Representative: Müller - Hoffmann & Partner
(86) International application number: PCT/JP2009/066004
(87) International publication number: WO 2011/030455

(57) **Abstract**

A secure auditing system includes a plurality of terminals (1) and a terminal management server (5). The terminal (1) includes a program memory (202), an execution permit list storage unit (301) that partially stores a list of programs, a program identifying unit (311) that determines whether an execution instruction program is a program in an execution permit list, and a hash value checking unit (313) that performs a checking operation using a hash value generated from a file of the program in the terminal 1 if the program is in the execution permit list. The terminal (1) further includes checking units (315, 501, and 511) that perform checking operations with the management server using the hash value generated from the file of the program if the program is not in the execution permit list, and an execution permit/prohibit unit (314) that provides an instruction to permit or prohibit the execution of the program in accordance with the checking results of the hash value.

## Description

### Technical Field

The present invention relates to a technique that audits security of a terminal connected to a network and executes a given program.

### Background Art

Damage to a computer over the Internet caused by a variety of computer viruses is on the increase and becomes diversified. An anti-computer virus step is a major concern in the building of a digital society (net society). Steps currently taken on a computer includes supplying a security patch for an OS (Operating System) and an application having a vulnerability to the computer, updating a computer virus definition file on the computer, and performing computer virus checking on the computer. However, it takes time to fully implement these steps on the computer. It is likely that the computer is infected with a computer virus before these steps are taken, and the effect of the steps is subject to some limitation.

As other steps, a variety of techniques of preventing a computer-virus-infected file from being executed are disclosed. Patent Literature 1 describes an information processing apparatus that prevents a virus-infected file from being executed in a simple and effective fashion. The information processing apparatus includes a determining unit and an execution processing unit. The determining unit determines whether a name of a file specified as an execution target by a user via a terminal, from among a plurality of files stored on a global database arranged in a server, matches a predetermined naming rule. If the name of the file does not match the naming rule, the execution processing unit determines that the execution target file is secure against a computer virus, and then permits the execution of the file. If the name of the file matches the naming rule, the execution processing unit determines that the execution target file is vulnerable to a computer virus, and alerts a user to the vulnerability. The execution processing unit permits the file matching the naming rule to be executed when the user re-instructs the execution of the file to be performed after the alerting. On the other hand, if the user instructs the execution of the file to be canceled, the execution processing unit cancels the execution of the file. In this way, the file that is re-instructed to be executed is registered in a secure file list storage unit. The secure file list storage unit stores a secure file list listing a file that is believed to be executed in a secure fashion. According to Patent Literature 1, the information processing apparatus includes a prohibit file list storage unit. The prohibit file list storage unit stores a prohibit file list listing a file that is to be prohibited from being executed. Described in Patent Literature 1 is that the execution of the file is not permitted as long as the file is registered in the prohibit file list, even if the file does not meet the naming rule. The use of the secure file list and unscrupulous file list easily and effectively prevents the execution of the file infected with virus from being executed.

According to Patent Literature 1, however, only the alerting indication is provided regardless of the level of the possibility (degree of danger) of computer virus infection. Since permit/prohibit of the execution of the file is determined depending entirely on the final decision of the user, it is highly likely that the computer-virus infected file is executed.

Patent Literature 2 describes a software monitoring system that takes an appropriate step against a computer virus. The software monitoring system includes a monitoring unit arranged over a network connected to a plurality of terminals, and retrieving feature information of each terminal. From the retrieved feature information, the software monitoring system effectively detects a terminal having a vulnerable software program or a terminal infected with a computer virus. The software monitoring system thus takes an appropriate step against a computer virus. Although the system described in Patent Literature 2 is appropriate for learning the security level of the terminal, an anti-computer virus step is taken after a change in a hash value (paragraph numbers 0019-0020 in Patent Literature 2) is detected. The software monitoring system still suffers from a measurable time lag.

### Citation List

### Patent Literature

[Patent Literature 1] Japanese Unexamined Patent Application Publication No. 2007-148805
[Patent Literature 2] Japanese Unexamined Patent Application Publication No. 2006-040196

### Summary of Invention

### Technical Problem

The object of the present invention is to provide a secure auditing method and a secure auditing system for checking the risk of computer virus infection to a file of a program installed on a terminal, and preventing a computer virus from starting up by permitting a program of an uninfected file to be performed.

### Solution to Problem

A secure auditing system of the present invention includes a plurality of terminals connected to a network, each terminal executing a given program in response to an instruction from an operation unit, and a management server connected to the network and auditing a permit/prohibit of an execution of the program at each terminal. The terminal includes a program storage unit that stores a given program in an update fashion, execution permit list generating means that generates a list of a predetermined program from among the given programs, and stores in an update fashion the list on an execution permit list storage unit, determining means that, in response to an execution instruction of one of the given programs provided by the operation unit, determines whether the given program is a program listed in the list stored on the execution permit list storage unit, first checking means that generates first checking information by reading the given program from the program storage unit if the determination of the determining means is affirmative, and checks a difference between the first checking information and information of the list corresponding to the program of the execution instruction on the execution permit list storage unit, checking information generating means that generates second checking information by reading the given program from the program storage unit if the determination of the determining means is non-affirmative, and transmits the second checking information to the management server, and execution permit/prohibit means that gives an instruction to permit or prohibit the execution of the program in response to a reply signal from the management server responsive to the second checking information that the checking information generating means has transmitted to the management server, and in response to the difference determination result of the first checking means. The management server includes a checking source information storage unit that stores checking source information corresponding to the second checking information of the program when the given program is written on the program storage unit, and second checking means that checks the second checking information received from the terminal against the checking source information stored on the checking source information storage unit and returns the checking results as the reply signal to the terminal.

A secure auditing method of the present invention controls a permit/prohibit of an execution of a program by each terminal connected to a network. The secure auditing method includes storing a given program on a program storage unit of the terminal in an update fashion, with execution permit list generating means of the terminal, generating a list of a predetermined program from among the given programs, and storing in an update fashion the list on an execution permit list storage unit, with determining means of the terminal, in response to an execution instruction of one of the given programs provided by the operation unit, determining whether the given program is a program listed in the list stored on the execution permit list storage unit, with first checking means of the terminal, generating first checking information by reading the given program from the program storage unit if the determination of the determining means is affirmative, and checking a difference between the first checking information and information of the list corresponding to the program of the execution instruction on the execution permit list storage unit, with checking information generating means of the terminal, generating second checking information by reading the given program from the program storage unit if the determination of the determining means is non-affirmative, and transmitting the second checking information to a management server, and storing checking source information corresponding to the second checking information of the given program on a checking source information storage unit of the management server connected to the network when the given program is written on the program storage unit, with second checking means of the management server, checking the second checking information received from the terminal against the checking source information stored on the checking source information storage unit and returning the results as a reply signal to the terminal, and with execution permit/prohibit means of the terminal, giving an instruction to permit or prohibit the execution of the program in response to the reply signal from the management server responsive to the second checking information that the checking information generating means has transmitted to the management server, and in response to the difference determination results of the first checking means.

According to the invention, the permit/prohibit of the execution of the program by each terminal connected to the network is controlled in accordance with secure auditing. More specifically, the given program is stored in an update fashion on the program storage unit of the terminal, and the execution permit list generating means of the terminal generates the list of the predetermined programs out of the given programs. The list is stored in an update fashion on the execution permit list storage unit. When the execution instruction of one of the given programs is provided by the operation unit, the determining means of the terminal determines whether the given program is a program listed in the list stored on the execution permit list storage unit. The first checking means generates the first checking information by reading the given program from the program storage unit if the determining means has provided an affirmative determination. The first checking means checks the difference between the first checking information and the information of the list corresponding to the program of the execution instruction on the execution permit list storage unit. The checking information generating means of the terminal generates the second checking information by reading the given program from the program storage unit if the determining means has provided a non-affirmative determination, and transmits the second checking information to the management server. In the management server, the checking source information storage unit stores the checking source information corresponding to the second checking information of the given program when the given program is written on the program storage unit. The second checking means of the management server checks the second checking information received from the terminal against the checking source information stored on the checking source information storage unit and returns the results as the reply signal to the terminal. The execution permit/prohibit means of the terminal gives the instruction to permit or prohibit the execution of the program in response to the reply signal from the management server responsive to the second checking information that the checking information generating means has transmitted to the management server, and in response to the difference determination results of the first checking means,

The terminal checks even a program listed in the execution permit list through self-diagnosis for falsification and computer virus infection. With the management server, the terminal performs security auditing on a program not listed in the execution permit list such that only a secure program is executed. Even if a computer virus enters and infects the file later, the computer virus is not activated.

### Advantageous Effects of Invention

According to the present invention, a computer-virus free file is permitted to execute the program in a manner such that a computer virus is not activated. As a result, the terminal is maintained in a secure state. Brief Description of Drawings

FIG. 1 generally illustrates a network system to which a secure auditing system of the present invention is applied.
FIG. 2 illustrates a process of determining a permit/prohibit of the execution of a program based on a hash value of a file.
FIG. 3 illustrates a process of embedding a terminal authentication stamp (unique authentication information) in a file of a program that is in a doubtful-operation on each terminal 1.
FIG. 4 illustrates a process of embedding the terminal authentication stamp (unique authentication information) in a file of a program that is generated on own terminal 1.
FIG. 5 illustrates a process of prohibiting an execution of an unauthorized operation pattern.
FIG. 6 is a flowchart illustrating a computer virus monitoring process on the terminal 1 of the system of FIG. 2.
FIG. 7 is a flowchart illustrating a computer virus monitoring process on a terminal management server 5 of the system of FIGS. 2, 3, and 4.
FIG. 8 is a flowchart illustrating a registration process of a file of a program such as a macro on the terminal 1 of the system of FIG. 3.
FIG. 9 is a flowchart illustrating a registration process of a file of a program such as a macro on the terminal management server 5 of the system of FIG. 3.
FIG. 10 is a flowchart illustrating a computer virus monitoring process on the terminal 1 of the system of FIGS. 3 and 4.
FIG. 11 is a flowchart illustrating a computer virus monitoring process on the terminal 1 of the system of FIGS. 3 and 4.
FIG. 12 is a flowchart illustrating an unauthorized operation pattern detection process on the terminal 1 of the system of FIG. 5.
FIG. 13 is a flowchart illustrating an unauthorized operation pattern list update process on the terminal 1 of the system of FIG. 5.
FIG. 14 is a flowchart illustrating an update process of an under-inspection list on the terminal 1 of the system of FIG. 5.
FIG. 15 is a flowchart illustrating an execution program monitoring process on the terminal 1 of the system of FIG. 5.

### Description of Embodiments

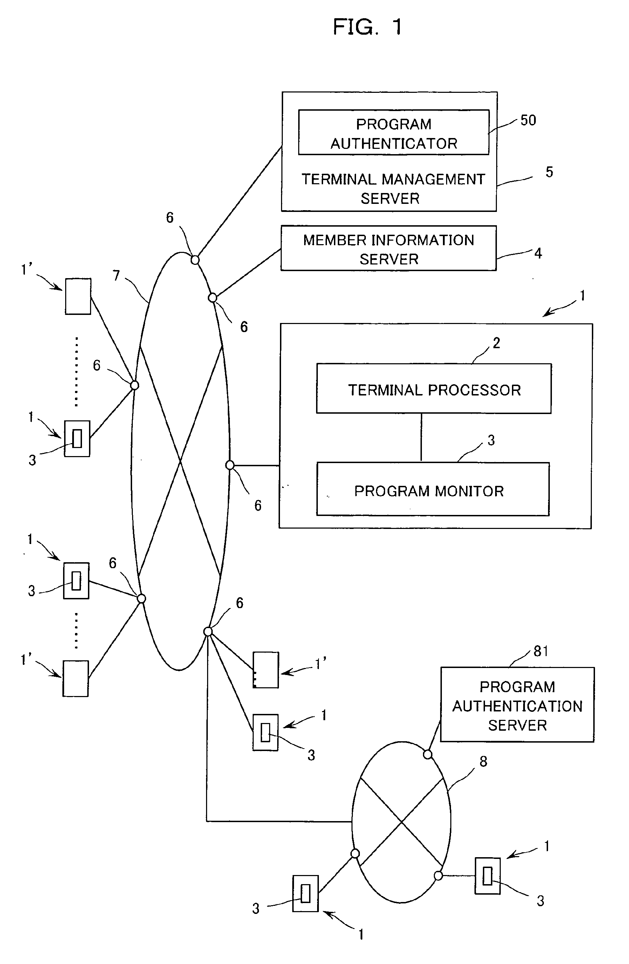

FIG. 1 illustrates a system configuration of a network system to which a secure auditing system of the present invention is applied. The network system of FIG. 1 includes terminals 1, member information server 4 and terminal management server 5. The terminals 1 may be installed at members including a consumer, a store, a firm, and further one or a plurality of banking facilities performing transaction settlements. The member information server 4 is installed at a management institution that generally manages and stores information of each terminal 1 and exchanged between the terminals 1. The terminal management server 5 performs security management of the terminal 1.

The terminal 1 typically includes a personal computer having a CPU (Central Processing Unit). The terminal 1 includes a terminal processor 2, and a program monitor 3. The terminal processor 2 generates, processes, and stores information using a software program for producing a document and drawings, and performs a typical process, such as transmitting and receiving information using a communication software program. The program monitor 3 executes a monitoring process of a program to be discussed later. More specifically, a software program is installed as the terminal processor 2 on the terminal 1 of each of the consumer, the store, and the firm. The software program produces and communicates documents related to buying or selling of products and services, asking for cost estimate of and billing charge for products and services, and payment and money received. More specifically, the terminal 1 settles typical business transactions, issues a bill from a store, receives a bill from a store, issues an instruction sheet to transfer money from a buyer to an account of an banking institution of a bill issuer (i.e., payment), issues a receipt of the money, and performs a transmission and reception process in a variety of digital documents of a business transaction regardless of whether the business transaction is performed in electronic settlement. The terminal 1 can produce a variety of documents in an electronic file in text format or binary format. The electronic file may be received by the terminal 1 via the member information server 4, for example. Installed on the terminal 1 of each banking institution is a software program that performs a settlement instruction process (an instruction to perform a settlement process at the banking institution) in accordance with a banking settlement document from the terminal 1 of the consumer or the firm.

The member information server 4 stores appropriate information related to a member as necessary, for example, member information such as the name, alias, mail address, and address of a member. The member information server 4 may include a storage unit storing a file transmission and reception history of each file, and a file type for management. The terminal management server 5 is operated by a predetermined system auditing corporation. The predetermined system auditing corporation is an entity that produces and distributes a software program managing the security of the terminal 1.

The system may find other applications. For example, the system may be applied to information communications between a plurality of terminals 1 connected to a LAN in an organization as a public institution that generates, stores and manages secret information, and also may be applied to information communications and a management system between the organization and a terminal external to the organization. If the program monitor 3, the member information server 4, and the terminal management server 5 are applied to the terminal 1 and the LAN within the organization, the LAN is considered as the network of the present invention.

The system employs the Internet as a network in terms of hardware. More specifically, each terminal 1 is connected to the Internet. The security of the terminal 1 and the security between the terminals 1 are assured with the Internet in terms of software. In the present invention, with the terminal 1 connected to the network, security is assured using software. Therefore, the network connected to the terminal 1 may be handled from the point of an exclusive network different from the Internet. In this way, a system free from the need to build a new infrastructure may be implemented. As necessary, the terminal 1 may be connected to another personal computer via the Internet for ordinary information communications, Web site search, browsing, and information retrieval over the Internet.

As illustrated in FIG. 1, the terminal 1 is connected to a network 7 via a provider (ISP) 6. A plurality of the terminals 1 is connected to the ISP 6a. Still, servers of an appropriate number, each having a Web site providing a variety of information, are also connected to the ISP 6, though not illustrated in FIG. 1. The terminals 1 connected to the ISP 6 include a terminal 1 having the program monitor 3 installed thereon and a standard terminal l' having no program monitor 3 installed thereon. The program monitor 3 includes a software program and a database needed for auditing. The software program beforehand checks whether a file of a program to be executed by the terminal 1 as described below is infected with a computer virus, and causes only a file uninfected with a computer virus to be executed. In other words, the software program prohibits the execution of a file of a program that is likely to be infected with a computer virus.

The terminal management server 5 includes a program authenticator 50. The program authenticator 50 performs an anti-computer virus step to a terminal 1 having a software program as the program monitor 3 out of the terminals connected to the network 7. More specifically, the program authenticator 50 certifies in advance of the execution of the program that the file of the program to be executed by the terminal 1 is not infected with a computer virus.

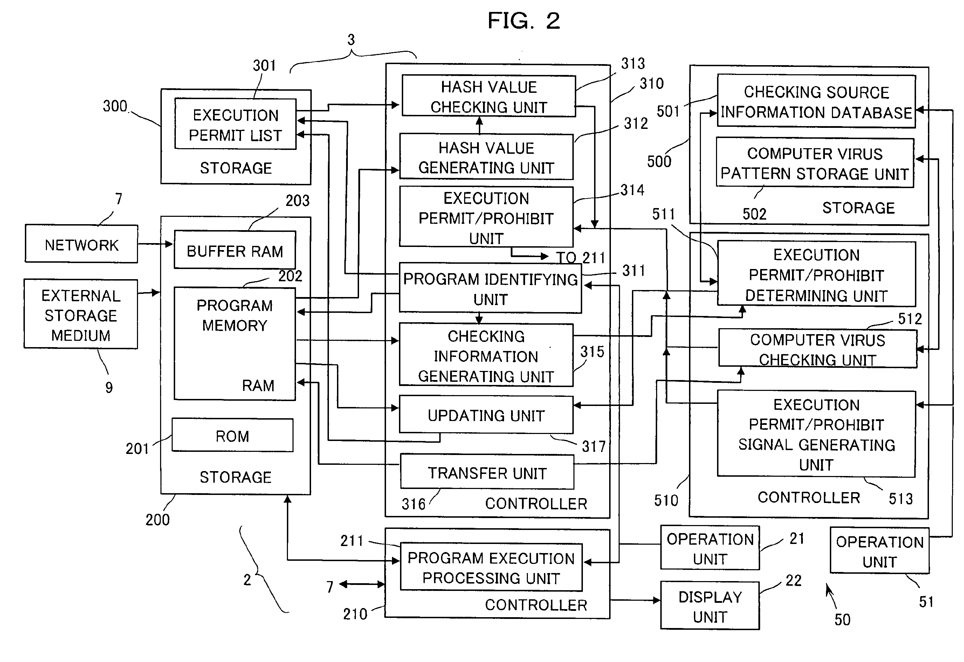

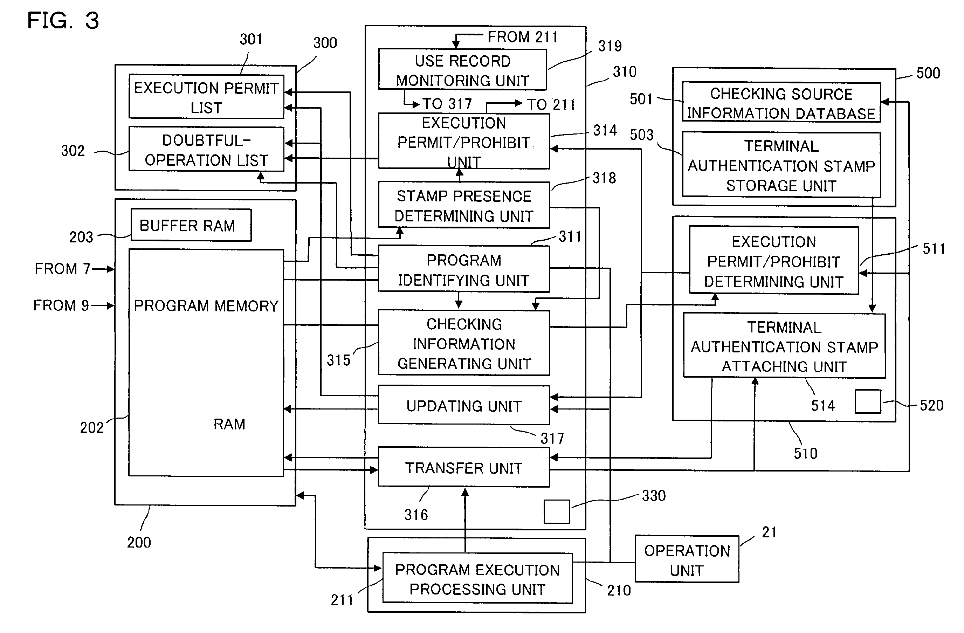

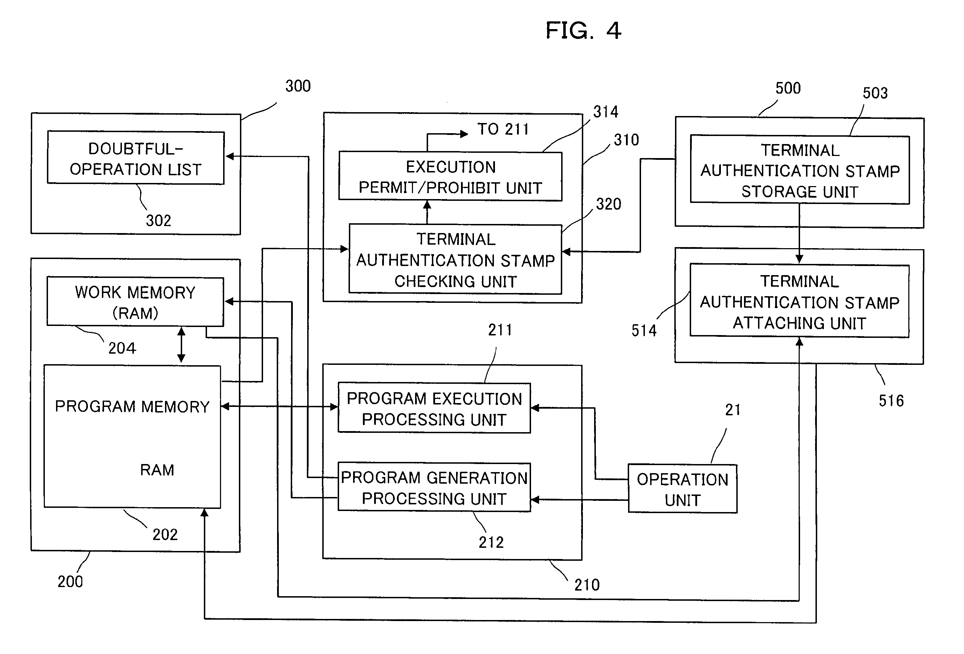

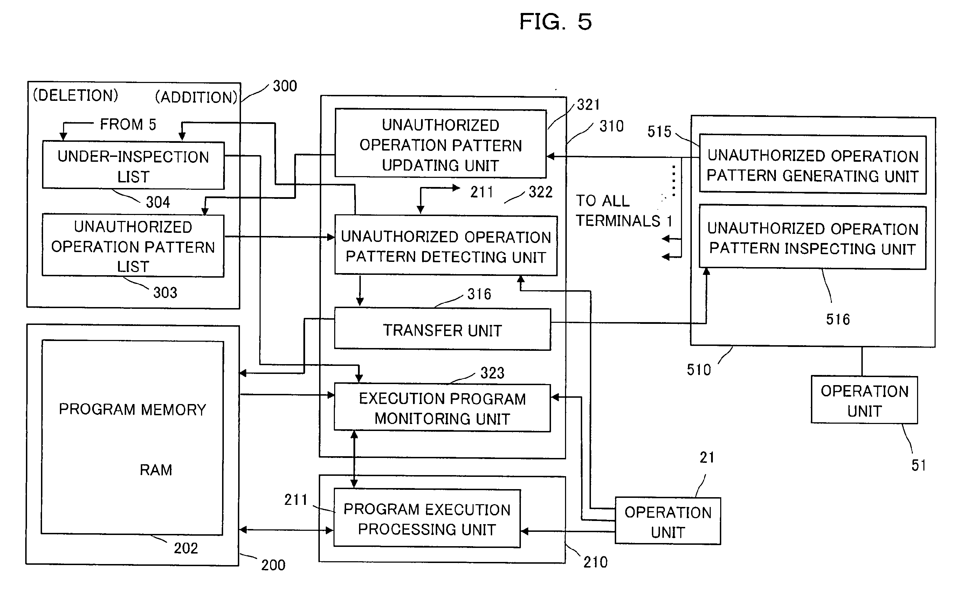

FIGS. 2 through 5 are functional block diagrams of the terminal processor 2, and the program monitor 3 in the terminal 1, and the program authenticator 50. For convenience of explanation and drawing, FIGS. 2 through 5 are divided appropriately by function. FIG. 2 illustrates a process of determining a permit/prohibit of the execution of a program based on a hash value of a file. FIG. 3 illustrates a process of embedding a terminal authentication stamp (unique authentication information) in the file of the program that is doubtful in terms of normal operation on each terminal 1. FIG. 4 illustrates a process of embedding the terminal authentication stamp (unique authentication information) in the file of the program that is generated on own terminal 1. FIG. 5 illustrates a process of prohibiting the execution of an unauthorized operation pattern.

As illustrated in FIG. 2, the terminal processor 2 in the terminal 1 includes a storage 200 and a controller 210. The controller 210 includes a program execution processing unit 211 that executes a specified program. The terminal processor 2 includes an operation unit 21 and a display unit 22. The operation unit 21 includes a mouse and a keyboard for displaying information, and instructing to process information (i.e., executing the corresponding program). The display unit 22 displays input information and process results. The storage 200 includes an ROM (Read Only Memory) 201 storing an OS (Operating System), a BIOS (Basic Input/Output System), and a RAM (Random Access Memory). The RAM includes a program memory 202 and a buffer memory 203. The program memory 202 stores files of a variety of application programs needed for a given process. The buffer memory 203 is arranged at an input-output section interfacing with the outside and temporarily stores received information. In addition, the RAM includes a work memory region temporarily storing information under process.

The program monitor 3 includes a storage 300 and a controller 310. The storage 300 stores information that is needed to monitor the file of the program and that is acquired when a software program to monitor the file of the program is individually installed on the terminal 1. The controller 310 executes the monitoring program. A portion of the storage 200 in the terminal processor 2 is preferably used for the storage 300 in the embodiment. As illustrated in FIG. 2, the storage 300 includes an execution permit list storage unit 301. An execution permit list is a list produced for each terminal 1. The execution permit list is list-intended information and identifies the file of the program that the terminal management server 5 permits to be executed on the basis that the file of the program is not infected with any computer virus on the terminal 1. The list-intended information of the execution permit list includes at least a (unique) hash value obtained from the file of the program. A variety of methods are present to generate a hash value of the program from the file of the program written in binary code, and any of the methods may be employed. For example, the entire file of the program is bisected or predetermined bits within a predetermined range of the file of the program are extracted and bisected. A predetermined logic process, such as AND gating, is performed on each of the bisected code groups to generate new code information, and the new code information is further bisected. The predetermined logic process is then performed on the bisected code information. This operation is repeated until the bit number reaches (is reduced to) a predetermined bit number. At the registration of the file of the program on the program memory 202, code information of predetermined bits may be obtained from the file of the program, and may be treated as a hash value. In addition to the hash value, the list-intended information may include vender information of the program or product information, or may further include version information.

The software program for monitoring the file of the program may be written on the external storage medium 9, such as hard disk, optical disk, flexible disk, CD, DVD, USB memory, semiconductor memory, or the like. The software program for monitoring the file of the program may be read via a known driver such as hard disk drive, optical disk drive, flexible disk drive, silicon disk drive, or cassette medium reading device. The software program for monitoring the file of the program is retrieved (installed) in an appropriate region (RAM region) of the storage 200 in the terminal 1. In one embodiment, the terminal 1 of the member may transmit a predetermined issue request to a computer of an administrative organization (one of the member information server 4 or the terminal management server 5), receive the software program and install the software program on the storage 200. In another embodiment, an extension board having the program may be inserted into the terminal 1. When the software program is installed, a user is requested to input information for a member registration on the display unit 22, for example. Upon inputting necessary information, the user is registered on the member information server 4.

When the software program installed to monitor the file of the program is read from an appropriate region of the storage 200 and is executed by the CPU in the terminal processor 2, the controller 310 functions as execution program identifying unit 311, hash value generating unit 312, hash value checking unit (first checking means) 313, execution permit/prohibit unit 314, checking information generating unit 315, transfer unit 316, and updating unit 317. The execution program identifying unit 311 identifies the file of the program to execute a process specified by the operation unit 21. The hash value generating unit 312 generates the hash value (first checking information) of the file of the program if the file of the specified program is stored on the execution permit list storage unit 301. The hash value checking unit 313 (first checking means) determines a difference between the generated hash value and the hash value included in the list-intended information of the file of the program in the execution permit list storage unit 301. If the two hash values do match, the execution permit/prohibit unit 314 generates an instruction signal to permit the execution of the program to be performed and then outputs the instruction signal to the program execution processing unit 211. If the two hash values fail to match, the execution permit/prohibit unit 314 generates an instruction signal to prohibit the execution of the program and outputs the instruction signal to the program execution processing unit 211. If the file of the specified program is not stored on the execution permit list storage unit 301, the checking information generating unit 315 generates checking information (second checking information) of the file of the program. The transfer unit 316 reads the file of the specified program from the program memory 202, and transfers the read file to the terminal management server 5 as a computer virus inspection target. If it is determined the file of the program as the inspection target is not infected with any computer virus, the updating unit 317 generates program identification information (list-intended information) of the file of the program. The updating unit 317 adds the program identification information to the execution permit list storage unit 301, thereby updating the content of the execution permit list storage unit 301. If the results of the hash value checking unit 313 indicate no match, the updating unit 317 deletes the list-intended information of the program from the execution permit list storage unit 301.

The program identifying unit 311 identifies the program that executes the process specified by the operation unit 21, and determines whether the identified program is a program listed in the list on the execution permit list storage unit 301. If it is determined that the identified program is listed in the list on the execution permit list storage unit 301, the program identifying unit 311 generates a read instruction signal based on the determination, and transmits the read instruction signal to the execution permit list storage unit 301 and the program memory 202. In response to the read instruction signal, the file of the corresponding program is read from the program memory 202 the hash value generating unit 312 and the hash value in the list-intended information of the corresponding program is read into the hash value checking unit 313 from the execution permit list storage unit 301. If it is determined that the identified program is not listed in the list on the execution permit list storage unit 301, the program identifying unit 311 generates an instruction signal to cause the checking information generating unit 315 to generate checking information. Because an executable program file has MZ and PE (Portable Executable Header) header as header information to be used by the OS in a determination process, for example, the program identifying unit 311 determines the presence or absence of the header information, thereby identifying the program file to be read.

The hash value generating unit 312 calculates the hash value using the rule preset from the file of the input program (to the production rule of the hash value of the list-intended information of the execution permit list storage unit 301). The hash value checking unit 313 checks a difference between the hash value generated by the hash value generating unit 312 and the hash value of the file of the program on the execution permit list storage unit 301, and outputs a match signal or a no-match signal as the checking results to the execution permit/prohibit unit 314. If the hash values match, it is also determined that the files of the programs match. If the hash values fail to match, it is determined that the files of the programs are different from each other. Even a file of a program listed in the list of the execution permit list storage unit 301 may be partly falsified into another version, or infected with a computer virus after installation. By checking the hash values for match with no exception, such falsification or the like may be detected and not overlooked. Preferably, the method of calculating the hash value using the generally whole file of the program may be used, and falsification is thus detected.

The execution permit/prohibit unit 314 receives a signal of the checking results from within the terminal 1, i.e., from the hash value checking unit 313, and as described below, also receives a permit/prohibit signal from the terminal management server 5 when the program scheduled to be executed is not a program listed in the execution permit list. In response, the execution permit/prohibit unit 314 generates a signal to instruct the execution of the program (permit signal) or a signal to instruct the prohibition of the execution of the program (prohibit signal) .

The terminal management server 5 includes the program authenticator 50 and the operation unit 51, and as necessary a display unit for an administrator. The program authenticator 50 is connected to a storage 500 having a region storing predetermined information and a work area temporarily storing information under process. The program authenticator 50 includes a controller 510 including a computer having a CPU. The storage 500 includes a checking source information database 501. The checking source information database 501 stores for each terminal 1 checking source information that is checked against the checking information generated from the file of the program in each terminal 1. The checking source information in the checking source information database 501 is generated and stored when the file of the program is installed on the program memory 202 in the terminal 1 for the first time. The checking source information corresponds to the checking information generated by the checking information generating unit 315. Each of the checking information and the checking source information preferably includes, in addition to the hash value described above, the vender information of the program or the product information, and further the version information in view of reliability.

The controller 510 reads an authentication program into a CPU and executes the authentication program. The controller 510 thus functions as the execution permit/prohibit determining unit (second checking means) 511, the computer virus checking unit 512, and the execution permit/prohibit signal generating unit 513.

If the program scheduled to be executed is not listed in the execution permit list, the execution permit/prohibit determining unit 511 performs a check process to check the checking information against the checking source information to determine a difference therebetween, and generates an execution permit/prohibit signal. The computer virus checking unit 512 executes a computer virus scan on the file of the program scheduled to be executed, detects the presence or absence of a computer virus infection through a known pattern matching, and outputs the execution permit/prohibit signal from the detection results (an execution permit signal or an execution prohibit). The computer virus checking unit 512 checks for a computer virus through the pattern matching using the computer virus pattern storage unit 502. The computer virus pattern storage unit 502 stores, in an update fashion, patterns of computer viruses successively received.

In a manner different from the manner of the execution permit/prohibit determining unit 511 and the computer virus checking unit 512, the execution permit/prohibit signal generating unit 513 generates the same execution permit/prohibit signal as described above in response to an operation from the operation unit 51. If no fraud is detected through the checking and the computer virus check, the administrator or highly technical outside experts (including an anti-computer virus software program) may further check for a computer virus. The execution permit/prohibit signal generating unit 513 receives the conclusion of the presence or absence of a computer virus, and generates the execution permit/prohibit signal in response to an instruction to permit or prohibit the execution of the program from the operation unit 51. Also in response to the instruction from the operation unit 51, the execution permit/prohibit signal generating unit 513 updates the checking source information database 501 by storing the checking information as new checking source information.

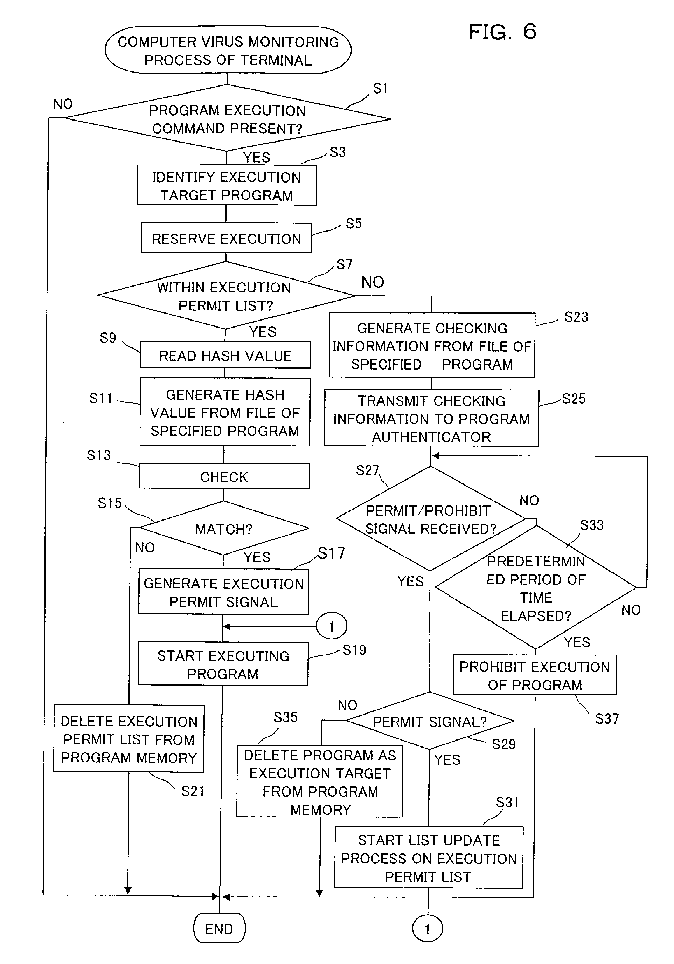

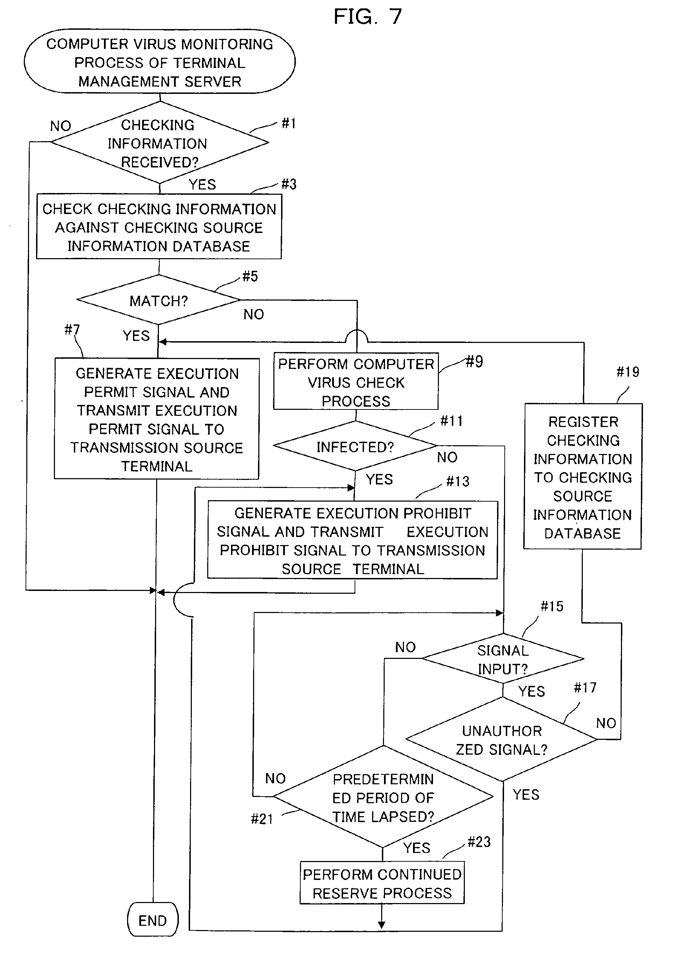

FIG. 6 is a flowchart illustrating a computer virus monitoring process of the terminal 1 of the system of FIG. 2. FIG. 7 is a flowchart illustrating a computer virus monitoring process of the terminal management server 5 of the system of FIG. 2.

As illustrated in FIG. 6, the terminal 1 determines whether a program execution command is input from the operation unit 21 (step S1). If the program execution command is not input, processing ends. If the program execution command is input, the terminal 1 identifies the file of the program specified as an execution target by the command (step S3). The terminal 1 then temporarily reserves the execution of the program as the execution target for a monitoring process (step S5). The terminal 1 determines whether the program as the execution target is listed in the list on the execution permit list storage unit 301 (step S7). If this determination is affirmative, the terminal 1 reads the hash value of the file of the program as the execution target from the execution permit list storage unit 301 into the hash value checking unit 313 (step S9). The terminal 1 then reads the file of the program as the execution target from the program memory 202 into the hash value generating unit 312. The hash value generating unit 312 then generates the hash value in accordance with the predetermined rule (step S11). The terminal 1 checks one hash value against the other (step S13). The terminal 1 thus determines whether the two hash values match (step S15). If the checking results indicate a match, the execution permit signal is generated and output to the program execution processing unit 211 (step S17). As a result, the program execution processing unit 211 starts the execution of the program as the execution target (i.e., starts the execution target program) (step S19). If the checking results indicate no match in step S15, the list-intended information corresponding to the program is deleted from the execution permit list storage unit 301, and the program is deleted from the program memory 202 (step S21). More specifically, the execution of the program is prohibited.

If the determination in step S7 is non-affirmative, the file of the program as the execution target is read. The checking information generating unit 315 generates the checking information (step S23). The generated checking information is transmitted to the program authenticator 50 in the terminal management server 5 (step S25) .

The terminal 1 determines whether the execution permit/prohibit signal has been received from the terminal management server 5 (step S27). If the execution permit/prohibit signal has been received, the terminal 1 determines whether the received signal is the execution permit signal (step S29). If the received signal is the execution permit signal, the execution permit/prohibit unit 314 converts the received signal into a predetermined instruction signal to execute the program. In response to the converted execution permit signal, the terminal 1 instructs a list update process to be started on the execution permit list storage unit 301 (step S31). Processing proceeds to step S19, and the program as the execution target starts. If it is determined in step S29 that the received signal is not the execution permit signal, in other words, the received signal is the execution prohibit signal, the program as the execution target is deleted from the program memory 202 (step S35). In the list update process in step S31, the terminal 1 determines that the program permitted to be executed is free from computer virus infection, and the updating unit 317 generates and adds the hash value, and other information in the same format as that of the list-intended information of the execution permit list storage unit 301.

If the execution permit/prohibit signal remains unreceived in step S27 for a predetermined period of time (YES in step S33), the execution status of the program is changed from a temporal reserve state to an execution prohibit state (step S37). Step S37 is assumed in case that the computer virus inspection, and the inspection of the presence or absence of a fraud take time. When inspection results are obtained, a step is taken on the program under inspection as an inspection target. The step is a process performed in response to an instruction from the terminal management server 5, and may include a deletion process of the program from the program memory 202. The predetermined period of time refers to a period of time slightly longer than a duration from when an operation is performed on the operation unit 21 to when a responsive action to the operation starts, and may be several seconds to tens of seconds, for example. Within or beyond the predetermined period of time, a notification suggesting that the computer virus inspection is under process may be supplied to the display unit 22. The notification may include a displayed indication. The notification may also include an audio output if a loudspeaker is arranged.

Referring to FIG. 7, the terminal management server 5 determines whether the checking information has been received (step #1). If the checking information has not been received, processing ends. If the checking information has been received, the terminal management server 5 checks the received checking information against the checking source information in the checking source information database 501 (step #3). If the received checking information matches the checking source information (YES in step #5), the terminal management server 5 generates an execution permit signal and returns the execution permit signal to the terminal 1 as a transmission source of the checking information (step #7) .

If it is determined in step #5 that the two signals fail to mach, the computer virus check process is performed (step #9). In the computer virus check process, the terminal management server 5 requests the transfer unit 316 in the terminal 1 as the transmission source of the checking information to transfer the file of the program as the execution target and checks the file of the program transferred as the execution target through the pattern matching technique, for example. If the program is infected with a computer virus (YES in step #11), the terminal management server 5 generates an execution prohibit signal, and returns the execution prohibit signal to the terminal 1 as the transmission source of the file of the program as the execution target (step #13).

If it is determined in step #11 that the program is not infected with any computer virus, the terminal management server 5 determines whether a signal indicating a fraud has received from the operation unit 51 (step #15).
If the input signal indicates a fraud (YES in step #17), processing proceeds to step #13. If the input signal indicates no fraud, the terminal management server 5 registers the checking information on the checking source information database 501 (i.e., updates the preceding checking source information) (step #19). Processing proceeds to step #7.

If no signal is input for a predetermined period of time (step #21), the reserve operation continues (step #23). Processing proceeds to step #13. The predetermined period of time is the period in step S33 of FIG. 6. In the process of the continued reserve operation, the administrator or the outside expert may further check the program for a computer virus if the file of the program as the execution target is found to be uninfected with any computer virus. In such a case, the execution of the program is temporarily prohibited, and the check results of the administrator are used to update data on predetermined memory units in the program authenticator 50 and in the terminal 1. More specifically, a memory unit storing a list of reserve information is arranged, and after checking, the reserve information is read from the memory unit to perform an update process to account for the check results on the reserve information.

As illustrated in FIG. 3, the storage 300 further includes a doubtful-operation list storage unit 302. A doubtful-operation list is a list of programs other than the programs listed in the execution permit list. The doubtful-operation list is stored in an update fashion on the program memory 202 in each terminal 1 and is a gray list of a file of a macro including a program permitted to be executed, an add-in file (referred to a sub-program), and the like. The program is stored in an update fashion on the program memory 202 on each terminal 1. The macro refers to a function of automatically performing a specific operational procedure. The specific operational procedure includes a predetermined program such as a document creation software program, or a spreadsheet software program. The specific operational procedure is generated as a program in advance, and the file of that program is registered. The add-in file refers to a file (program) to which an extension function is added to. These programs are indicated by a file with an extension added to a file of a basic program, and are identifiable. As illustrated in FIG. 3, it is assumed that the macro file and the add-in file are retrieved from the outside. Alternatively, the macro file and the add-in file may be generated in the terminal 1.

As described below, the updating unit 317 in the controller 310 interchanges lists between the execution permit list storage unit 301 and the doubtful-operation list storage unit 302 based on execution permit/prohibit result and use record determination result. As illustrated in FIG. 3 (also FIG. 4 as described below), the updating unit 317 registers on the program memory 202 a program retrieved from the outside and a program generated within the terminal 1 in response to an instruction from the operation unit 21. In the registration, the file including a macro and the add-in file are identified by referring to the extension thereof and the like.

The controller 310 further includes a stamp presence determining unit 318 and a use record monitoring unit 319. The storage 500 in the program authenticator 50 further includes a terminal authentication stamp storage unit 503. The controller 510 further includes a terminal authentication stamp attaching unit 514.

The terminal authentication stamp storage unit 503 is described first. A stamp stored on the terminal authentication stamp storage unit 503 is information unique to the terminal that is generated when the software program as the program monitor 3 is installed on the terminal 1. The stamp is generated based on information of a holder of the terminal 1 (including an exclusive user), IP address, mail address or other information or based on the desire of the holder of the terminal 1. The terminal authentication stamp storage unit 503 thus stores a stamp for each terminal 1. The stamp is signature information attached to the terminal 1 in order to guarantee authenticity of a digital document, and is digitally represented using a character, a symbol, a mark, or the like. According to the embodiment, symbols of a predetermined number are represented in binary code and used as a stamp.

The terminal authentication stamp attaching unit 514 electronically attaches, to a file of a program requesting stamp attaching and transmitted from a terminal 1, a stamp. The stamp identifies the terminal 1 as the transmission source and corresponds to the terminal 1. For example, the terminal authentication stamp attaching unit 514 embeds the stamp in the file. In the electronic embedding process as one form of electronic attachment, a binary code describing the stamp is embedded in the file of the program in accordance with a predetermined rule. The predetermined rules may include a method of embedding the stamp at a predetermined location of the file at a time, a method of embedding the stamp by splitting the binary code of the stamp into a specific number of codes and embedding the codes at a plurality of predetermined locations in the file, and any of a variety of known methods. If the program file is executable, an empty region unused in the execution of the program is present in the MZ header, and the stamp may be embedded in the empty region.

According to the embodiment, the stamp attaching process, i.e., the stamp embedding process herein is mainly performed on the file of the macro program from among the programs registered on the doubtful-operation list storage unit 302 of the terminal 1 having the software program of the program monitor 3 installed thereon. If the file of the macro program is modified in the data thereof (for example, numerical data thereof) even with the program itself remaining unmodified, the file of the macro program comes to have another hash value. Each time the macro program is executed, the file of the macro program needs to be transferred to the terminal management server 5 for inspection. Such a frequent transmission of the file is not preferable, because it increases the workload of the transmission process, slows down the speed of the process, and increases information leakage opportunity over the network. A file of a macro program may be produced to use a program listed in the execution permit list on the terminal 1. A terminal authentication stamp may be embedded in the file of the macro program in a manner such that authenticity of the terminal is certified (guaranteed) by specifying the terminal.

If a program listed in the list on the doubtful-operation list storage unit 302 is an execution target, the stamp presence determining unit 318 determines the presence or absence of a stamp first, and outputs the determination results to the execution permit/prohibit unit 314. In response to the program of the file with a stamp attached thereto, the execution permit/prohibit unit 314 outputs the execution permit signal to the program execution processing unit 211. If no stamp is attached to the file of the target program, the stamp presence determining unit 318 outputs an instruction to cause the checking information generating unit 315 to generate the checking information and to output the checking information to the program authenticator 50.

The use record monitoring unit 319 monitors a use history of one program registered in the execution permit list storage unit 301. If the program lasts in an unused state for a predetermined period of time, the use record monitoring unit 319 deletes the program from the execution permit list storage unit 301 and then adds the program to the doubtful-operation list storage unit 302. In other words, the use record monitoring unit 319 downgrades the program in view of computer virus infection. If the unused period of time is over a certain period, the file of the program, even if it is an appropriate one, is subject to falsification, and the possibility of no match in the hash values increases. Therefore, in such a case, the program is downgraded beforehand. Without checking the hash values and the checking information, a determination result can be obtained by a single computer virus check process as described below. If the computer virus check proves that the program is uninfected, the program may be upgraded to (revert back to) the execution permit list.

If the program listed in the list on the doubtful-operation list storage unit 302 becomes an execution target, besides, the stamp presence determining unit 318 may determine that the program has no stamp attached, then the checking information generating unit 315 generates the checking information of the file of the program and transmits the generated checking information to the execution permit/prohibit determining unit 511.

The transfer unit 316 transmits a newly generated file of the macro program to the terminal authentication stamp attaching unit 514. The file of the macro program with the stamp attached thereto is stored on the program memory 202. In the transmission of the file of the macro program to the terminal management server 5, the file is transmitted as packet data of TCI/IP. The packet data may include data input by a user in addition to the macro program. For this reason, the data section of TCP/IP is preferably encrypted and then transmitted. In order to prevent the data from being decoded, the method of encryption is more preferably modified each time the data are transmitted. The same arrangement is preferably made when the file of the macro program with the stamp attached thereto is returned from the terminal management server 5 to the terminal 1 as the transmission source.

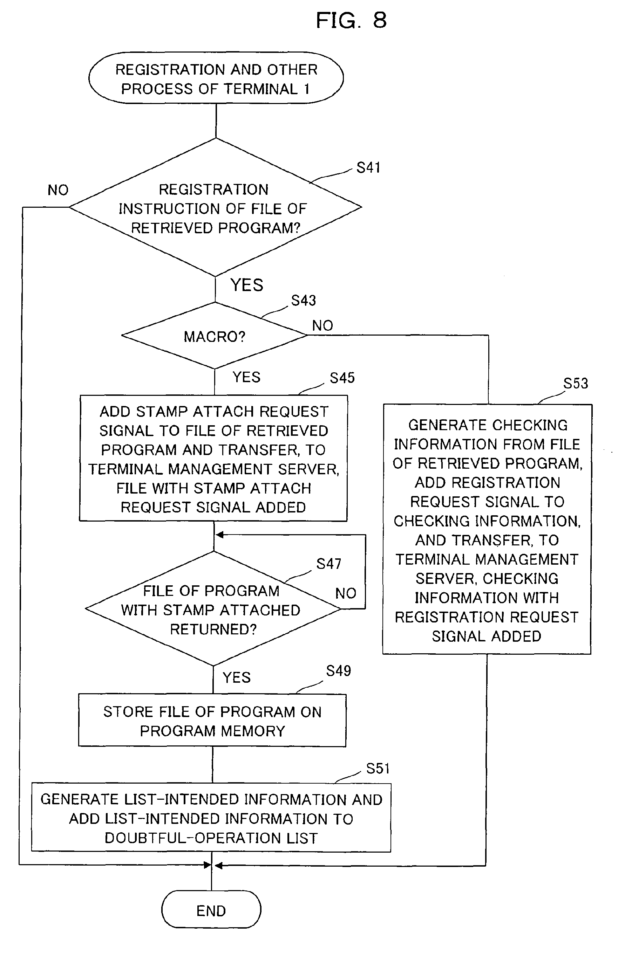

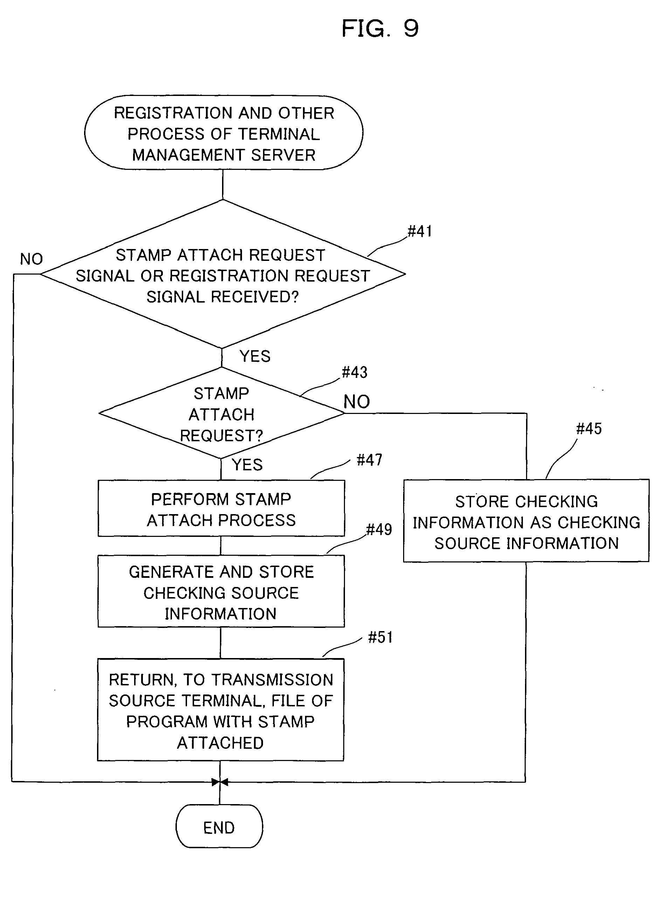

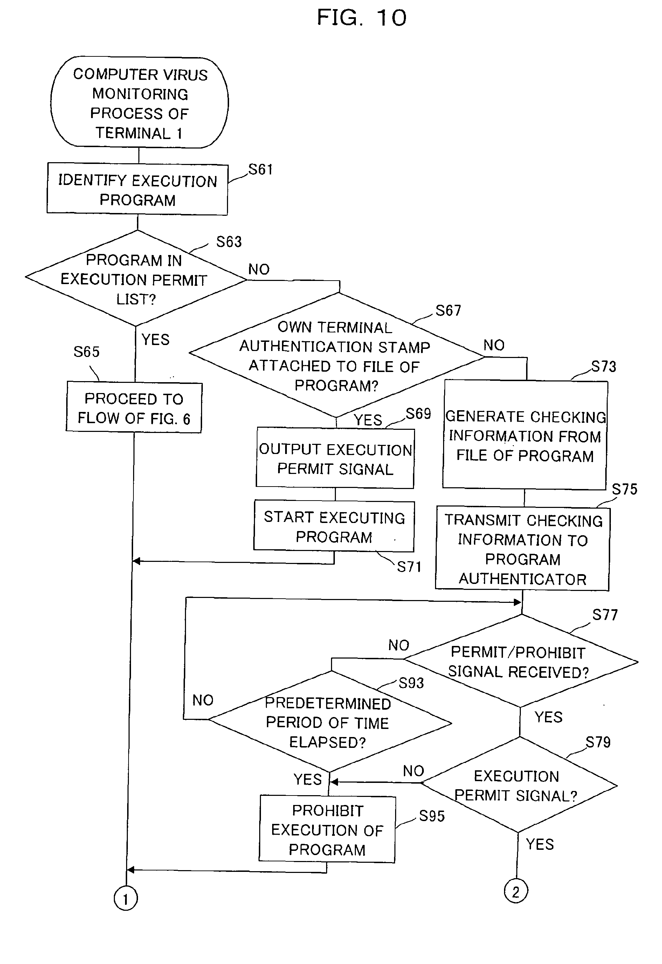

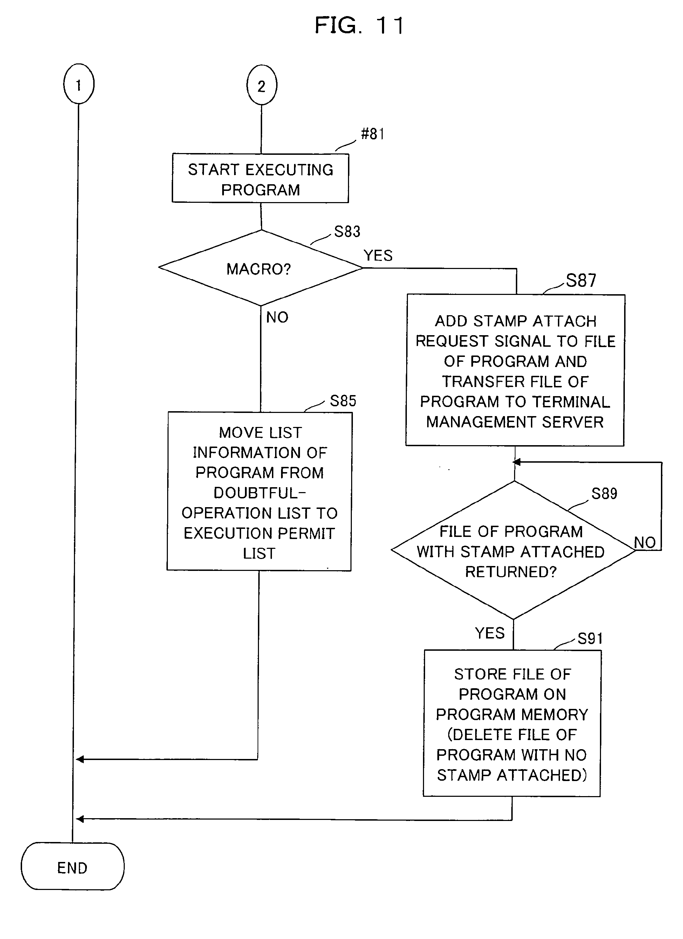

FIG. 8 is a flowchart illustrating a registration process of a file of a program such as a macro performed by the terminal 1 of the system of FIG. 3. FIG. 9 is a flowchart illustrating a registration process of a file of a program such as a macro performed by the terminal management server 5 of the system of FIG. 3. FIGS. 10 and 11 are a flowchart illustrating a computer virus monitoring process performed by the terminal 1 of the system of FIG. 3. FIG. 7 is a flowchart which serves as a flowchart illustrating a computer virus monitoring process performed by the terminal management server 5 of the system of FIG. 3 like a case of FIG. 2.

A file of a macro having as a body a file of a program listed in the list on the execution permit list storage unit 301 and a file of an add-in program are retrieved in FIG. 8. If a registration instruction is issued from the operation unit 21 (YES in step S41), the terminal 1 determines whether the program is a macro program (step S41). If the program is a macro program, a stamp attach request signal is added to the file of the retrieved program, and then the file of the program with the stamp attach request signal added thereto is transferred to the terminal management server 5 (step S45). The terminal 1 determines whether the program is returned (step S47). If the program is returned, the returned file of the program is stored on the program memory 202 (step S49). The corresponding list-intended information is generated, and then added to the doubtful-operation list storage unit 302 (step S51). If it is determined in step S41 that the program is not a macro program, the checking information is generated from the file of the retrieved program in accordance with the predetermined rule described above. A registration request signal is added to the checking information and then the checking information with the registration request signal added thereto is transferred to the terminal management server 5 (step S53) .

If the stamp attach request signal or the registration request signal is received (step #41) in FIG. 9, the terminal management server 5 determines whether the received signal is the attach request (step #43). If the received signal is not the stamp attach request signal, the received signal is the registration request signal. The terminal management server 5 writes the checking information of the received file as the checking source information on the checking source information database 501 (step #45).

If it is determined in step #43 that the received signal is the stamp attach request signal, the stamp attaching process is performed in accordance with the rule described above (step #47). The checking source information is then generated and written on the checking source information database 501 (step #49). Finally, the file of the program with the stamp attached thereto is returned to the terminal 1 as the transmission source (step #51) .

In FIGS. 10 and 11, an execution program is identified first (step S61). The terminal 1 determines whether the program is listed in the execution permit list (step S63). If the program is listed in the execution permit list, processing proceeds to step S5 in the flowchart of FIG. 6 (step S65). Step S5 starts with the check process of the hash values in the terminal 1.

If the program is not listed in the execution permit list, the terminal 1 determines whether the file of the program has own terminal authentication stamp attached thereto (step S67). If the stamp is attached to the file, the execution permit signal is output (step S69). The terminal 1 executes the program (step S71). If it is determined in step S67 that no stamp is attached to the file, the checking information is generated from the file of the program (step S73). The checking information is transmitted to the program authenticator 50 (step S75).

The terminal 1 determines whether the execution permit/prohibit signal has been received (step S77). If the received signal is the execution permit signal (step S79), the terminal 1 starts executing the program (step S81). The terminal 1 determines whether the program is a macro program (step S83). If the program is not a macro program, the terminal 1 moves the list-intended information of the program from the doubtful-operation list to the execution permit list (step S85). If it is determined in step S83 that the program is a macro program, the terminal 1 adds the stamp attach request signal to the file of the program and then transmits the file to the terminal management server 5 (step S87). The terminal 1 then determines whether the file of the program with the stamp attached thereto is returned (step S89). If the file of the program is returned, the terminal 1 stores the returned file of the program on the program memory 202 (updates the file of the program prior to stamp attaching to the file of the program with the stamp attached thereto) (step S91). Processing thus ends.

If it is determined in step S79 that the received signal is not the execution permit signal, the terminal 1 prohibits the execution of the program (step S95). If the determination operation in step S77 lasts beyond a predetermined period of time (YES in step S93), the terminal 1 prohibits the execution of the program (step S95) . Processing ends.

The checking of the checking information and the computer virus checking are performed by the terminal management server 5 as illustrated in FIG. 7.

The terminal 1 may retrieve a macro program generated in another terminal 1 (with the stamp generated by the other terminal 1 attached). In this case, the retrieving the terminal 1 in a standard operation thereof does not add a new stamp to the macro program. In this way, source information that indicates which terminal 1 has generated the macro program remains untouched. When the macro program is executed, the controller 310 (or the program execution processing unit 211) reverses the predetermined rule described above to remove the code information of the stamp from the file of the macro program, and then executes the program. As illustrated in FIG. 9, a determination operation is added to determine whether a stamp has been attached to the file of the program. If the stamp has not been attached, the operation in FIG. 9 is performed. If the stamp has been attached, step #47 of FIG. 9 is skipped.

As illustrated in FIG. 4, the storage 200 further includes a RAM (work memory) 204. The controller 210 further includes a program generation processing unit 212. The program generation processing unit 212 operates when the terminal 1 generates a new macro or another program using the operation unit 21. The program generation processing unit 212 describes a program and performs a registration instruction process. The work memory 204 serves as an area that temporarily stores information under process when the program generation processing unit 212 generates the program. The program generation processing unit 212 detects that the file written on the program memory 202 by the OS is new.
The program generation processing unit 212 thus recognizes that the written file is a newly written file.

The registration of the program generated by the terminal 1 on the program memory 202 and the list addition process of the program to the doubtful-operation list storage unit 302 are performed in the same manner as in the process described with reference to FIGS. 8 and 9. In the configuration of FIG. 4, step S41 of FIG. 8 becomes unnecessary, and processing uniformly proceeds to step S45. More specifically, the file of the program newly generated by the terminal 1 is registered. In step S45, the stamp request signal is added to the file of the generated program, and the file is then transferred to the terminal management server 5. In step #41 of FIG. 9, the received signals are all the signals with the stamp attach request signal added thereto, and steps #43 and #45 become unnecessary.

The controller 310 further includes a terminal authentication stamp checking unit 320. When a file of a program generated by the program generation processing unit 212 and stored on the program memory 202 with a stamp identifying a host terminal 1 attached thereto becomes an execution target later, the terminal authentication stamp checking unit 320 extracts stamp information from the file of the program on the program memory 202 while reading the stamp information of the corresponding terminal on the terminal authentication stamp storage unit 503 of the storage 500. The terminal authentication stamp checking unit 320 then checks one stamp against the other. If the two stamps match each other, the execution permit/prohibit unit 314 generates the execution permit signal. If the two stamps fail to match, the program stored on the program memory 202 may be falsified or infected with a computer virus. In other words, the program become inappropriate and is thus prohibited from being executed. In the embodiment of FIG. 3, the stamp presence determining unit 318 may be replaced with the terminal authentication stamp checking unit 320. In this way, the stamp checking is performed on the macro program each time the program is executed after retrieval, and an increase in the reliability of the system results. Conversely, the terminal authentication stamp checking unit 320 may be replaced with the stamp presence determining unit 318 in Fig. 4. In such a case, the checking may be performed on the terminal 1.

In order to register the file of the generated program, the file is transferred from the work memory 204 to the terminal authentication stamp attaching unit 514. The stamp is then attached to the file by the terminal authentication stamp attaching unit 514, and then the file with the stamp attached thereto is returned to the program memory 202 for storage.

The computer virus monitoring process of the terminal 1 of the system of FIG. 4, and the computer virus monitoring process of the terminal management server 5 are performed in the same procedural steps as those illustrated in FIGS. 10, 11, and 7.

In FIG. 4, the terminal authentication stamp checking unit 320 performs the above-described stamp checking subsequent to YES in step S67 in FIGS. 10 and 11. If the determination results of the stamp checking indicate match, the execution permit signal is output in S69. If the determination results of the stamp checking indicate no match, processing proceeds to step S73. In the configuration of FIG. 3, the terminal authentication stamp checking unit 320 is preferably used as in the configuration of FIG. 4.

In FIG. 5, the storage 300 further includes an unauthorized operation pattern list storage unit 303 and an under-inspection list storage unit 304. An unauthorized operation pattern list lists a typical unauthorized operation pattern and a pattern similar to the typical unauthorized operation pattern among various executing patterns to constitute a program. The unauthorized operation pattern list also lists an unusual state in which an operation speed is excessively high when the system is operated by a person, or meaningless information processing. The unauthorized operation pattern list is typically transmitted from the terminal management server 5 to all the terminals 1 that have installed the software program of the program monitor 3. For example, the unauthorized operation pattern list lists a file of instruction codes that are executable by the CPU. When an unauthorized operation pattern detecting unit 322 to be discussed later detects an unauthorized operation pattern, the instruction codes of all the list are executed in parallel, and the check process with the inspection targets is concurrently performed. Then, the presence or absence of the unauthorized operation pattern is detected, and the unauthorized operation pattern is identified.

When an unauthorized operation pattern and the file of the program having caused the unauthorized operation pattern are under inspection (analysis) on the terminal management server 5, the under-inspection list storage unit 304 stores the program and the list of the unauthorized operation pattern. Each time an unauthorized operation pattern occurs, the unauthorized operation pattern is added to the unauthorized operation pattern list. Each time the analysis of the unauthorized operation pattern is complete, the unauthorized operation pattern is deleted. The under-inspection list storage unit 304 stores list information for each terminal 1.

The controller 310 further includes unauthorized operation pattern updating unit 321, unauthorized operation pattern detecting unit 322, and execution program monitoring unit 323. The controller 510 in the terminal management server 5 includes unauthorized operation pattern generating unit 515 and unauthorized operation pattern inspecting unit 516. The unauthorized operation pattern generating unit 515 generates an unauthorized operation pattern, and transmits (distribute) the unauthorized operation pattern to all the terminals 1 having the software program of the program monitor 3 installed thereon. Each time a new unauthorized operation pattern is recognized, the new unauthorized operation pattern is additionally transmitted to the terminals 1. The unauthorized operation pattern updating unit 321 causes the unauthorized operation pattern list storage unit 303 to store, in an update fashion, the unauthorized operation pattern transmitted by the unauthorized operation pattern generating unit 515.

The unauthorized operation pattern detecting unit 322 monitors the generation of an unauthorized operation pattern during the execution of the program that is executed in response to an instruction from the operation unit 21. When an unauthorized operation pattern occurs, the unauthorized operation pattern detecting unit 322 additionally stores, in a mapped fashion on the under-inspection list storage unit 304, information identifying the program, information identifying the unauthorized operation pattern, information identifying the location of occurrence of the unauthorized operation pattern in the program. The unauthorized operation pattern detecting unit 322 instructs the transfer unit 316 to transfer the program and the unauthorized operation pattern to the terminal management server 5. The unauthorized operation pattern includes an operation of opening a particular window on the screen of the display unit 22, an operation of opening a window irregularly, and an operation in which a signal similar to an instruction signal is generated when a particular key or any unspecified key of the keyboard of the operation unit 21 is quickly and repeatedly pressed.

The transfer unit 316 reads the file of the specified program from the program memory 202, and transfers to the terminal management server 5 the file together with the unauthorized operation pattern and the information of the unauthorized location detected by the unauthorized operation pattern detecting unit 322.

The unauthorized operation pattern inspecting unit 516 analyses the file of the program, the unauthorized operation pattern, and the information of the unauthorized location transferred from the transfer unit 316 to identify the cause of the unauthorized operation pattern in accordance with a predetermined procedure. For example, the unauthorized operation pattern inspecting unit 516 analyses the content of the unauthorized operation pattern by performing an analysis process over the presence or absence of falsification, and the computer virus check process. If the analysis results indicate that the program has a security problem, a use inhibit process is performed on the program. More specifically, the program is deleted from the execution permit list storage unit 301 and the doubtful-operation list storage unit 302. When the analysis process is complete, the list-intended information under inspection is deleted from the under-inspection list storage unit 304.

When an execution instruction is provided for the program under inspection by the operation unit 21, the execution program monitoring unit 323 inhibits the execution of the program by skipping the process corresponding to the part of the unauthorized operation pattern detected. The program may be a communication program. The communication program, if shifted into a communication state, may be difficult to quit. An output port connected to ISP 6 may be blocked by controlling the OS and possible information leakage is thus prevented (i.e., the process results are invalidated).

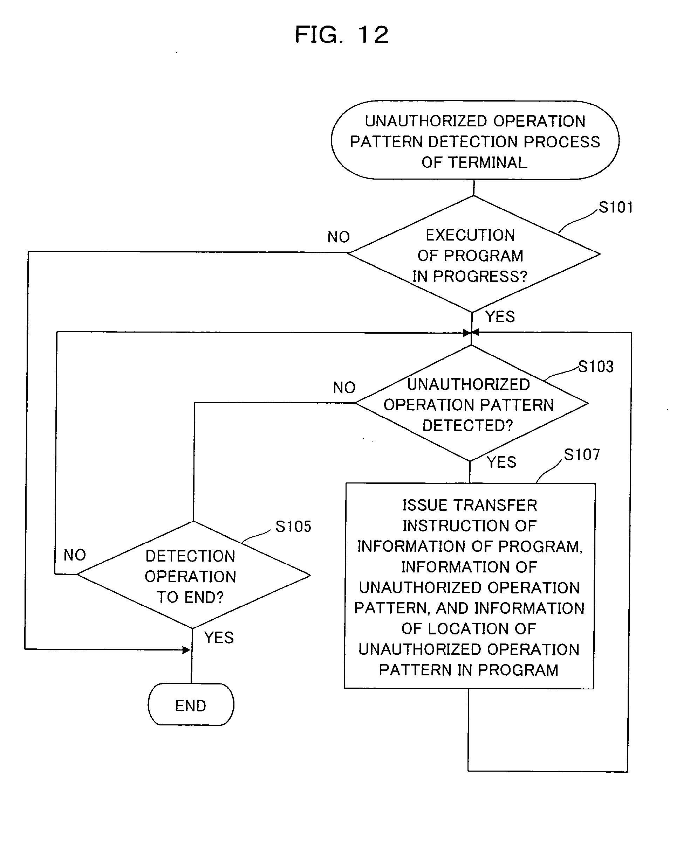

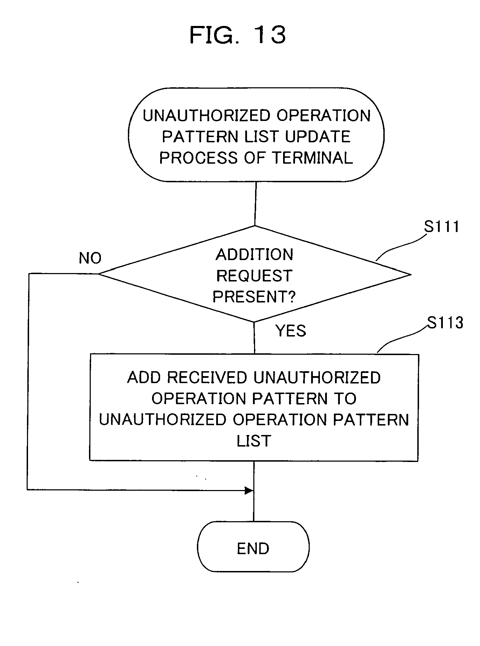

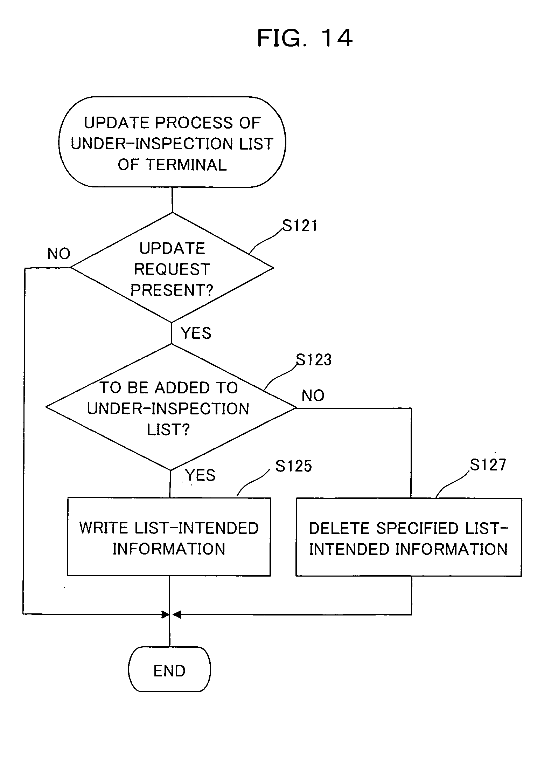

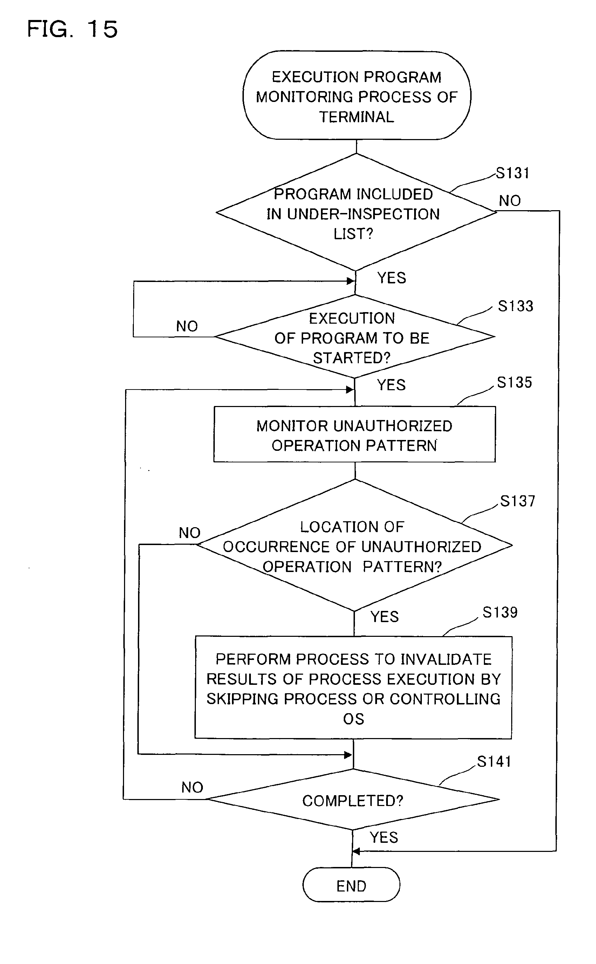

FIG. 12 is a flowchart illustrating an unauthorized operation pattern detection process of the terminal 1 of the system of FIG. 5. FIG. 13 is a flowchart illustrating an unauthorized operation pattern list update process of the terminal 1 of the system of FIG. 5. FIG. 14 is a flowchart illustrating an update process of an under-inspection list of the terminal 1 of the system of FIG. 5. FIG. 15 is a flowchart illustrating an execution program monitoring process of the terminal 1 of the system of FIG. 5.

As illustrated in FIG. 12, the terminal 1 determines whether the program is running (step S101) . If the program is not running, the process of FIG. 12 ends. If the program is running, the terminal 1 determines whether an unauthorized operation pattern has been detected (step S103). If no unauthorized operation pattern is detected, the detection process continues until the program is complete (NO in step S105). If an unauthorized operation pattern is detected, the terminal 1 performs a transfer instruction process and a storage process on the information identifying the file of the program, the information identifying the unauthorized operation pattern, and the information indentifying the occurrence location of the unauthorized operation pattern of the program (step S107). Then, processing returns to S103.

As illustrated in FIG. 13, the terminal 1 determines the presence or absence of an addition request for the unauthorized operation pattern list (step S111). If no addition request is placed, the process of FIG. 13 ends. If an addition request is placed, the terminal 1 additionally stores on the unauthorized operation pattern list storage unit 303 the information of the received unauthorized operation pattern together with the information identifying the unauthorized operation pattern (step S113).

As illustrated in FIG. 14, the terminal 1 determines whether an update request of the under-inspection list is placed or not (step S121). If no update request is placed, the process of FIG. 14 ends. If an update request is placed, the terminal 1 determines whether the update request is an addition to the under-inspection list (step S123). If the update request is the addition to the under-inspection list, the list-intended information is written (step S125). If the update request is the deletion of the under-inspection list, the specified list-intended information is deleted (step S127) .

As illustrated in FIG. 15, the terminal 1 determines whether the program specified by the operation unit 21 as the one to be executed is listed in the under-inspection list (step S131) . If the program to be executed is not listed in the under-inspection list, the process of FIG. 15 ends. If the program to be executed is listed in the under-inspection list, the terminal 1 determines whether to start the execution of the program (step S133). The terminal 1 monitors the generation of an unauthorized operation pattern (step S135). If the process of the running program is at the occurrence location of the unauthorized operation pattern (step S137), the process of the program is skipped, or the process execution result is invalidated by controlling the OS (step S139). Which way to go depends on the program. For example, if the program has a process skip capability, the corresponding process may be skipped. If the program is difficult to modify in process, the program may be preset such that the process result is invalidated by controlling the OS.

The terminal 1 then determines whether the execution of the program is complete (step S141) . If the program is not complete, processing returns to step S135 to continue the monitoring. If the program is complete, the process of FIG. 15 ends.

The present invention includes the arrangements described below.

(1) According to the embodiment, the process related to an electronic settlement is performed among the members through the terminals 1. Therefore, in an embodiment where a plurality of terminals are connected to a LAN (Local Area Network) in a company, an organization, or the like, the terminal 1 is handled as an individual terminal. As illustrated in FIG. 1, the present invention is applicable as described below if a company or an organization is equipped with a large number of terminals connected to a LAN 8. For example, a program authentication server 81 corresponding to the program authenticator 50 in the terminal management server 5 is arranged over the LAN 8 in a manner such that each terminal 1 over the LAN 8 is managed. The terminal 1 over the LAN 8 preferably causes the program authentication server 81 to perform part of the above-described function, such as a program certifying function to an in-house developed program.

(2) The file of a program likely to be infected with a computer virus, other than a program in the execution permit list and a program with the authentication stamp attached thereto, is preferably deleted from the program memory 202 regularly, or when a predetermined number of files accumulate, or at a desired point of time.

(3) The file of a program once determined as a computer-virus infected file by the terminal management server 5 may be handled as an unauthorized file list (black list) by the terminal 1. In other words, the terminal 1 may discriminate that file from the other files, and may perform an execution disable process on that file immediately without receiving an acknowledgement from the terminal management server 5 at each startup instruction. Alternatively, an execution disable stamp as opposed to the terminal authentication stamp may be attached (embedded) in the file of the program. With this arrangement, communications with the terminal management server 5 may be omitted.

(4) The terminal authentication stamp attaching unit 514 is arranged in the terminal management server 5 in the embodiment. The present invention is not limited to this arrangement. The terminal authentication stamp attaching unit 514 may be implemented as part of the software program of the program monitor 3 in the terminal 1. This arrangement eliminates the need to exchange the target program over the network prior to and subsequent to the stamp attaching each time the terminal authentication stamp is attached. More specifically, the terminal management server 5 includes the checking source information database 501 that stores the stamp of each terminal 1 as an original. The terminal management server 5 also includes a stamp issuing unit 520 (see FIG. 3). In response to a stamp transmission request transmitted from at least one terminal 1 at the time of a request or when the stamp attaching is needed, the stamp issuing unit 520 issues a stamp unique to the terminal 1 that has requested the stamp to be issued. The terminal 1 receives the issued stamp and temporarily stores the received stamp on the storage 200. The terminal 1 includes a function unit corresponding to the terminal authentication stamp attaching unit 514. A new terminal authentication stamp attaching unit 330 (see FIG. 3) in the terminal 1 reads a stamp from the storage 200 and then attaches (embeds) the stamp to the file of a subprogram or the file of a program generated on own terminal. Identification information (such as a serial number) is attached to the stamp issued by the terminal management server 5 and stored on the stamp storage unit in order to restrict copying.

(5) According to the embodiment, the hash value of the file of the program or other information is used as the checking source information. The hash value and the header related information may be used. The file of the program has header information on a leading region thereof, and has, on the next section, text data for the program, and execution file data written. The header information includes an entry point, and size data. If a change takes place in the execution file data section (typically a computer virus infection), the entry point or the size data at least change. In one embodiment, the header information directly, or the hash value calculated therefrom, or the entry point and the size data may be used as the header related information.

The present invention is related to a secure auditing system including a plurality of terminals connected to a network, each terminal executing a given program in response to an instruction from an operation unit, and a management server connected to the network and auditing a permit/prohibit of an execution of the program at each terminal. The terminal includes a program storage unit that stores a given program in an update fashion, execution permit list generating means that generates a list of a predetermined program from among the given programs, and stores in an update fashion the list on an execution permit list storage unit, determining means that, in response to an execution instruction of one of the given programs provided by the operation unit, determines whether the given program is a program listed in the list stored on the execution permit list storage unit, first checking means that generates first checking information by reading the given program from the program storage unit if the determination of the determining means is affirmative, and checks a difference between the first checking information and information of the list corresponding to the program of the execution instruction on the execution permit list storage unit, checking information generating means that generates second checking information by reading the given program from the program storage unit if the determination of the determining means is non-affirmative, and transmits the second checking information to the management server, and execution permit/prohibit means that gives an instruction to permit or prohibit the execution of the program in response to a reply signal from the management server responsive to the second checking information that the checking information generating means has transmitted to the management server, and in response to the difference determination result of the first checking means. The management server includes a checking source information storage unit that stores checking source information corresponding to the second checking information of the given program when the given program is written on the program storage unit, and second checking means that checks the second checking information received from the terminal against the checking source information stored on the checking source information storage unit and returns the checking results as the reply signal to the terminal. With this arrangement, the terminal checks even a program listed in the execution permit list for falsification and computer virus infection through self-diagnosis. The terminal performs security auditing on a program not listed in the execution permit list with the management server such that only a secure program is executed. Even if a computer virus enters and infects the file later, the computer virus is not activated.

The first checking information preferably includes a hash value generated from the file of each program. With this arrangement, the hash value generated from the file of the program is information having a small bit number and unique to a program that may be falsified or infected with a computer virus. The hash value is thus appropriate for checking purposes.

Each of the second checking information and the checking source information preferably includes the hash value generated from the file of a program and header related information corresponding to header information stored on a header region of the file of the program. This arrangement detects a change in the execution file region in addition to the hash value, and increases determination reliability.

The terminal preferably includes first transfer means that reads the given program from the program storage unit and transmits the given program to the management server if the checking results of the second checking means indicate no match, and the management server preferably includes computer virus checking means that checks whether the given program transferred by the transfer means is infected with a computer virus, and returns to the execution permit/prohibit means a signal that prohibits the execution of the given program if the given program is infected with the computer virus. This arrangement determines the matching of the checking information, and performs the computer virus checking if the checking results indicate no match. This arrangement thus eliminates the need to perform the computer virus checking each time.

The terminal preferably includes doubtful-operation list generating means that stores in an update fashion a list of macro programs, each having as a base a program listed in an execution permit list, on a doubtful-operation list storage unit different from the execution permit list storage unit, and second transfer means that transmits the macro program to the management server prior to an installation of the macro program on the program storage unit in response to the reception of an instruction from the operation unit. The management server preferably includes a unique authentication information storage unit that stores authentication information unique to each terminal, and unique authentication information attaching means that attaches the unique authentication information of the terminal to the received file of the macro program and then returns to the terminal the file with the unique authentication information attached thereto. The terminal further includes install processing means that installs on the program storage unit the file of the macro program with the unique authentication information attached thereto, and unique authentication information checking means that outputs to the execution permit/prohibit means a signal that permits the execution of the program to be performed if it is determined in response to the execution instruction of the macro program from the operation unit that the unique authentication information attached to the macro program matches the information stored on the unique authentication information storage unit as the unique authentication information of the macro program. With this arrangement, the macro program having as a body the program listed in the execution permit list is listed in the doubtful-operation list and the authentication information unique to the terminal is attached to (embedded in) the file of the macro program. The file of the macro program is then installed on the program storage unit. When the execution instruction for the macro program is provided later, the unique authentication information attached to the file of the macro program is checked against the unique authentication information stored on the management server and serving as an original. Even if the numerical value of the macro program changes, an unauthorized alteration and computer virus infection are checked.

The terminal preferably includes program generating means that generates a program via the operation unit, doubtful-operation list generating means that stores in an update fashion on the doubtful-operation list storage unit a list of new programs generated by the program generating means, and second transfer means that transmits the new program to the management server prior to an installation of the new program on the program storage unit in response to the reception of an instruction from the operation unit.
The management server preferably includes a unique authentication information storage unit that stores authentication information unique to each terminal, and unique authentication information attaching means that attaches the unique authentication information of the terminal to the received file of the new program and then returns to the terminal the file with the unique authentication information attached. The terminal preferably further includes install processing means that installs on the program storage unit the file of the new program with the unique authentication information attached thereto, and unique authentication information checking means that outputs to the execution permit/prohibit means a signal that permits the execution of the program to be performed if it is determined in response to the execution instruction of the new program from the operation unit that the unique authentication information attached to the new program matches the information stored on the unique authentication information storage unit as the unique authentication information of the new program. With this arrangement, a new program generated by own terminal is listed in the doubtful-operation list. The authentication information unique to the terminal is attached to (for example, embedded in) the file of the new program, and the file of the new program is installed on the program storage unit. When the execution instruction for the new program is provided later, the unique authentication information attached to the file of the new program is checked against the unique authentication information stored on the management server and serving as an original. Even if the numerical value of the macro program changes, an unauthorized alteration and computer virus infection are checked.

Preferably, the checking information generating means generates the second checking information and transmits the generated second checking information to the management server if the checking results of the unique authentication information checking means indicate no match. Preferably, the second checking means checks the second checking information transmitted from the terminal against the checking source information stored on the checking source information storage unit, and returns the checking results as the reply signal to the terminal. With this arrangement, if the checking results of the unique authentication information indicate no match, the checking information is checked for match. The reliability of the system thus increases.

The terminal preferably includes doubtful-operation list generating means that stores in an update fashion a list of macro programs, each having as a base a program listed in an execution permit list on a doubtful-operation list storage unit different from the execution permit list storage unit. The management server preferably includes a unique authentication information storage unit that stores authentication information unique to each terminal, and an issuing unit that issues the unique authentication information to the terminal in response to a request from the terminal. The terminal preferably further includes unique authentication information attaching means that attaches, in response to an instruction from the operation unit, the issued unique authentication information to the file of the macro program prior to an installation of the macro program on the program storage unit, install processing means that installs on the program storage unit the file of the macro program with the unique authentication information attached thereto, and unique authentication information checking means that outputs to the execution permit/prohibit means a signal that permits the execution of the macro program to be performed if it is determined in response to the execution instruction of the macro program from the operation unit that the unique authentication information attached to the macro program matches the information stored on the unique authentication information storage unit as the unique authentication information of the macro program. This arrangement allows the issued unique authentication information to be received in advance. The unique authentication information is attached to the file of the macro program as necessary.

The terminal preferably includes program generating means that generates a program via the operation unit, and doubtful-operation list generating means that stores on a doubtful-operation list storage unit a list of new programs generated by the program generating means. The management server preferably includes a unique authentication information storage unit that stores authentication information unique to each terminal, and an issuing unit that issues the unique authentication information to the terminal in response to a request from the terminal. The terminal preferably further includes unique authentication information attaching means that attaches, in response to an instruction from the operation unit, the issued unique authentication information to the file of the new program prior to an installation of the new program on the program storage unit, install processing means that installs on the program storage unit the file of the new program with the unique authentication information attached thereto, and unique authentication information checking means that outputs to the execution permit/prohibit means a signal that permits the execution of the new program to be performed if it is determined in response to the execution instruction of the new program from the operation unit that the unique authentication information attached to the new program matches the information stored on the unique authentication information storage unit as the unique authentication information of the new program. This arrangement allows the issued unique authentication information to be received in advance. The unique authentication information is attached to the file of the new program as necessary.

Preferably, the checking information generating means generates the second checking information and transmits the second checking information if the checking results of the unique authentication information checking means indicate no match. Preferably, the second checking means preferably checks the second checking information transmitted from the terminal against the checking source information stored on the checking source information storage unit, and returns the checking results as the reply signal to the terminal. With this arrangement, if the checking results of the unique authentication information indicate no match, the checking of the checking information is performed. The reliability of the system increases.

The terminal preferably includes monitoring means that monitors whether an unexecution state of the program listed in the execution permit list lasts longer than a predetermined period, and list deleting means that deletes, from the execution permit list, a program having an unexecution state lasting longer than the predetermined period. If the program listed in the execution permit list is left unused for a predetermined period of time with this arrangement, the opportunity of conversion and computer virus infection increases with time throughout the period of time. For this reason, the program is deleted from the execution permit list at any rate, and the program having reliability lowered in terms of security is downgraded. Reference Signs List

- 1: Terminal
- 2: Terminal processor
- 21: Operation unit
- 3: Program monitor
- 5: Terminal management server
- 7: Network
- 202: Program memory (program storage unit)
- 211: Program execution processing unit
- 212: Program generation processing unit (program generating means)
- 301: Execution permit list storage unit
- 302: Doubtful-operation list storage unit
- 303: Unauthorized operation pattern list storage unit
- 304: Under-inspection list storage unit
- 311: Program identifying unit (determining means)
- 312: Hash value generating unit (first checking means)
- 313: Hash value checking unit (first checking means)
- 314: Execution permit/prohibit unit (execution permit/prohibit means)
- 315: Checking information generating unit (checking information generating means)
- 316: Transfer unit (transfer means)
- 317: Updating unit (execution permit list generating means, doubtful-operation list generating means, list deleting means, and install processing means)
- 318: Stamp presence determining unit
- 319: Use record monitoring unit (monitoring means)
- 320: Terminal authentication stamp checking unit (unique authentication information checking means)
- 321: Unauthorized operation pattern updating unit
- 322: Unauthorized operation pattern detecting unit
- 323: Execution program monitoring unit
- 330: Terminal authentication stamp attaching unit (unique authentication information attaching means)
- 501: Checking source information database (checking source information storage unit)
- 502: Computer virus pattern storage unit
- 503: Terminal authentication stamp storage unit (unique authentication information storage unit)
- 511: Execution permit/prohibit determining unit (second checking means)
- 512: Computer virus checking unit
- 513: Execution permit/prohibit signal generating unit
- 514: Terminal authentication stamp attaching unit (unique authentication information attaching means)
- 515: Unauthorized operation pattern generating unit
- 516: Unauthorized operation pattern inspecting unit (install processing means)
- 520: Stamp issuing unit (issuing means)

## Claims

1. A secure auditing system comprising a plurality of terminals connected to a network, each terminal executing a given program in response to an instruction from an operation unit, and a management server connected to the network and auditing a permit/prohibit of an execution of the program at each terminal,
wherein the terminal includes
a program storage unit that stores a given program in an update fashion,
execution permit list generating means that generates a list of a predetermined program from among the given programs, and stores in an update fashion the list on an execution permit list storage unit,
determining means that, in response to an execution instruction of one of the given programs provided by the operation unit, determines whether the given program is a program listed in the list stored on the execution permit list storage unit,
first checking means that generates first checking information by reading the given program from the program storage unit if the determination of the determining means is affirmative, and checks a difference between the first checking information and information of the list corresponding to the program of the execution instruction on the execution permit list storage unit,
checking information generating means that generates second checking information by reading the given program from the program storage unit if the determination of the determining means is non-affirmative, and transmits the second checking information to the management server, and
execution permit/prohibit means that gives an instruction to permit or prohibit the execution of the program in response to a reply signal from the management server responsive to the second checking information that the checking information generating means has transmitted to the management server, and in response to the difference determination result of the first checking means, and
wherein the management server includes
a checking source information storage unit that stores checking source information corresponding to the second checking information of the program when the given program is written on the program storage unit, and
second checking means that checks the second checking information received from the terminal against the checking source information stored on the checking source information storage unit and returns the checking results as the reply signal to the terminal.

2. The secure auditing system according to claim 1, wherein the first checking information comprises a hash value generated from the file of each program.

3. The secure auditing system according to one of claims 1 and 2, wherein each of the second checking information and the checking source information comprises the hash value generated from the file of a program and header related information corresponding to header information stored on a header region of the file of the program.

4. The secure auditing system according to one of claims 1 through 3, wherein the terminal includes first transfer means that reads the given program from the program storage unit and transmits the given program to the management server if the checking results of the second checking means indicate no match,
wherein the management server includes computer virus checking means that checks whether the given program transferred by the transfer means is infected with a computer virus, and returns to the execution permit/prohibit means a signal that prohibits the execution of the given program if the given program is infected with the computer virus.

5. The secure auditing system according to one of claims 1 through 3, wherein the terminal includes
doubtful-operation list generating means that stores in an update fashion a list of macro programs, each having as a base a program listed in an execution permit list, on a doubtful-operation list storage unit different from the execution permit list storage unit, and
second transfer means that transmits the macro program to the management server prior to an installation of the macro program on the program storage unit in response to the reception of an instruction from the operation unit, and
wherein the management server includes a unique authentication information storage unit that stores unique authentication information to each terminal, and
unique authentication information attaching means that attaches the unique authentication information of the terminal to the received file of the macro program and then returns to the terminal the file with the unique authentication information attached thereto, and
wherein the terminal further includes
install processing means that installs on the program storage unit the file of the macro program with the unique authentication information attached thereto, and
unique authentication information checking means that outputs to the execution permit/prohibit means a signal that permits the execution of the program to be performed if it is determined in response to the execution instruction of the macro program from the operation unit that the unique authentication information attached to the macro program matches the information stored on the unique authentication information storage unit as the unique authentication information of the macro program.

6. The secure auditing system according to one of claims 1 through 3, wherein the terminal includes
program generating means that generates a program via the operation unit,
doubtful-operation list generating means that stores in an update fashion on the doubtful-operation list storage unit a list of the new program generated by the program generating means, and
second transfer means that transmits the new program to the management server prior to an installation of the new program on the program storage unit in response to the reception of an instruction from the operation unit, and
wherein the management server includes
a unique authentication information storage unit that stores unique authentication information to each terminal, and
unique authentication information attaching means that attaches the unique authentication information of the terminal to the received file of the new program and then returns to the terminal the file with the unique authentication information attached, and
wherein the terminal further includes
install processing means that installs on the program storage unit the file of the new program with the unique authentication information attached thereto, and
unique authentication information checking means that outputs to the execution permit/prohibit means a signal that permits the execution of the program to be performed if it is determined in response to the execution instruction of the new program from the operation unit that the unique authentication information attached to the new program matches the information stored on the unique authentication information storage unit as the unique authentication information of the new program.

7. The secure auditing system according to one of claims 5 and 6, wherein the checking information generating means generates the second checking information and transmits the generated second checking information to the management server if the checking results of the unique authentication information checking means indicate no match, and wherein the second checking means checks the second checking information transmitted from the terminal against the checking source information stored on the checking source information storage unit, and returns the checking results as the reply signal to the terminal.

8. The secure auditing system according to one of claims 1 through 3, wherein the terminal includes
doubtful-operation list generating means that stores in an update fashion a list of macro programs, each having as a base a program listed in an execution permit list, on a doubtful-operation list storage unit different from the execution permit list storage unit,
wherein the management server includes
a unique authentication information storage unit that stores unique authentication information to each terminal, and
an issuing unit that issues the unique authentication information to the terminal in response to a request from the terminal, and
wherein the terminal further includes
unique authentication information attaching means that attaches, in response to an instruction from the operation unit, the issued unique authentication information to the file of the macro program prior to an installation of the macro program on the program storage unit,
install processing means that installs on the program storage unit the file of the macro program with the unique authentication information attached thereto, and
unique authentication information checking means that outputs to the execution permit/prohibit means a signal that permits the execution of the macro program to be performed if it is determined in response to the execution instruction of the macro program from the operation unit that the unique authentication information attached to the macro program matches the information stored on the unique authentication information storage unit as the unique authentication information of the macro program.

9. The secure auditing system according to one of claims 1 through 3, wherein the terminal includes
program generating means that generates a program via the operation unit, and
doubtful-operation list generating means that stores on a doubtful-operation list storage unit a list of new programs generated by the program generating means,
wherein the management server includes
a unique authentication information storage unit that stores unique authentication information to each terminal, and
an issuing unit that issues the unique authentication information to the terminal in response to a request from the terminal, and
wherein the terminal further includes
unique authentication information attaching means that attaches, in response to an instruction from the operation unit, the issued unique authentication information to the file of the new program prior to an installation of the new program on the program storage unit,
install processing means that installs on the program storage unit the file of the new program with the unique authentication information attached thereto, and
unique authentication information checking means that outputs to the execution permit/prohibit means a signal that permits the execution of the new program to be performed if it is determined in response to the execution instruction of the new program from the operation unit that the unique authentication information attached to the new program matches the information stored on the unique authentication information storage unit as the unique authentication information of the new program.

10. The secure auditing system according to one of claims 8 and 9, wherein the checking information generating means generates the second checking information and transmits the second checking information if the checking results of the unique authentication information checking means indicate no match, and wherein the second checking means checks the second checking information transmitted from the terminal against the checking source information stored on the checking source information storage unit, and returns the checking results as the reply signal to the terminal.

11. The secure auditing system according to one of claims 1 through 10, wherein the terminal comprises
monitoring means that monitors whether an unexecution state of the program listed in the execution permit list lasts longer than a predetermined period, and
list deleting means that deletes, from the execution permit list, a program having an unexecution state lasting longer than the predetermined period.

12. A secure auditing method controlling a permit/prohibit of an execution of a program by each terminal connected to a network, the secure auditing method comprising
storing a given program on a program storage unit of the terminal in an update fashion,
with execution permit list generating means of the terminal, generating a list of a predetermined program from among the given programs, and storing in an update fashion the list on an execution permit list storage unit,
with determining means of the terminal, in response to an execution instruction of the given program provided by an operation unit, determining whether the given program is a program listed in the list stored on the execution permit list storage unit,
with first checking means of the terminal, generating first checking information by reading the given program from the program storage unit if the determination of the determining means is affirmative, and checking a difference between the first checking information and information of the list corresponding to the program of the execution instruction on the execution permit list storage unit,
with checking information generating means of the terminal, generating second checking information by reading the given program from the program storage unit if the determination of the determining means is non-affirmative, and transmitting the second checking information to a management server, and
storing checking source information corresponding to the second checking information of the given program on a checking source information storage unit of the management server connected to the network when the given program is written on the program storage unit,
with second checking means of the management server, checking the second checking information received from the terminal against the checking source information stored on the checking source information storage unit and returning the results as a reply signal to the terminal, and
with execution permit/prohibit means of the terminal, giving an instruction to permit or prohibit the execution of
the program in response to the reply signal from the management server responsive to the second checking information that the checking information generating means has transmitted to the management server, and in response to the difference determination results of the first checking means.
